# EUROPÄISCHE PATENTSCHRIFT

(11) **EP 1 414 618 B1**
(45) Veröffentlichungstag und Bekanntmachung des Hinweises auf die Patenterteilung: **20.09.2006**
(21) Anmeldenummer: 02747234.9
(22) Anmeldetag: 22.06.2002
(51) Int. Cl.: B24B 55/10, B24B 23/02, B24B 27/08, B23Q 11/00

(54) **SCHUTZVORRICHTUNG FÜR EINE HANDWERKZEUGMASCHINE**
PROTECTIVE DEVICE FOR A HAND MACHINE TOOL
DISPOSITIF DE PROTECTION POUR MACHINE-OUTIL MANUELLE

(30) Priorität: 29.06.2001 DE 10131266
(43) Veröffentlichungstag der Anmeldung: 06.05.2004
(73) Patentinhaber: ROBERT BOSCH GMBH, 70442 Stuttgart (DE)
(72) Erfinder: WENDT, Dieter, 70771 Leinfelden-Echterdingen (DE); VOIGT, Mike, 74405 Gaildorf (DE); KLEIDER, Albert, 74523 Schwaebisch Hall (DE); SCHADOW, Joachim, 72135 Dettenhausen (DE); NEEF, Kurt, 74405 Gaildorf (DE); MUELLER-BOYSEN, Ulrich, 73732 Esslingen (DE); SCHANBACHER, Juergen, verstorben (DE)
(86) Internationale Anmeldenummer: PCT/DE2002/002300
(87) Internationale Veröffentlichungsnummer: WO 2003/004218

(56) Entgegenhaltungen:
- WO-A-90/06832
- DE-A- 3 635 159
- DE-A- 19 829 190

## Beschreibung

### Stand der Technik

Die Erfindung geht aus von einer Schutzvorrichtung für eine Handwerkzeugmaschine, insbesondere für eine Schleifhandwerkzeugmaschine, nach dem Oberbegriff des Anspruchs 1.

Gemäß DE 3635159 A1 ist eine Schattenfugenfräse bekannt, die an ihrer Unterseite eine Gleitkufe trägt, mit der sie auf einem Werkstück abgestützt führbar ist. Diese trägt auf der Gleitkufe eine nach oben weisende Schutzhaube, die in ihrem oberen Bereich an einer Einmündungsstelle ein radial, schräg zum scheibenförmigen Werkzeug angeordnetes Staubabführrohr. Das Staubabführrohr umgreift das Werkzeug mit seinem Umfang, ohne dabei ins Innere der Schutzhaube zu ragen und ohne direkt vom Werkzeug mitgerissene Späne und Staub aufzufangen. Dadurch und durch die Einmündung des Staubabführrohres oben an der Schutzhaube ist die Staubabfuhr weniger gut, als sie sein könnte.

Es sind Schutzvorrichtungen für Handwerkzeugmaschinen, insbesondere für Winkelschleifer, bekannt, deren Schutzhauben zwar einen gewissen Schutz bei Schleifarbeiten bieten, die jedoch keine ausreichende Staubabsaugung unterstützen trotz der üblicherweise verwendeten kräftigen externen Staubsauger. Außerdem erschwert die übliche, radiale Absaugschlauchführung die Handhabung der Handwerkzeugmaschine infolge des radial abstehenden Absaugschlauchs.

### Vorteile der Erfindung

Die Erfindung geht aus von einer Schutzvorrichtung für eine Handwerkzeugmaschine, insbesondere für eine Schleifhandwerkzeugmaschine, mit einer Schutzhaube, die dazu vorgesehen ist, ein scheibenförmiges, drehendes Werkzeug zumindest teilweise zu umgreifen, und mit einem Staubabführrohr, dessen Längsachse in einem Winkel von bis zu 80° zur Rotationsachse des Werkzeugs angeordnet ist, wobei ein Teil des Staubabführrohrs die Ebene einer flachen Seite des Werkzeugs durchdringt, die Schutzhaube einen Austrittsbereich aufweist, in dem das Werkzeug während des Betriebs teilweise aus der Schutzhaube austritt, und die Schutzhaube im Austrittsbereich eine Gleitkufe umfasst.

Es wird vorgeschlagen, dass das Staubabführrohr fest mit der Gleitkufe verbunden ist. Die Gleitkufe führt die Schutzhaube entlang des Werkstücks und hält das Staubabführrohr in konstanter Distanz zum Werkstück. Die Mündung des Staubabführrohrs kann auf diese Weise so positioniert werden, dass sie in Flugrichtung der Partikel ausgerichtet ist.

Durch die schräge Führung des Staubabführrohrs wird eine gute Handhabbarkeit der Handwerkzeugmaschine erzielt, wobei gleichzeitig durch die Ausgestaltung des Staubabführrohrs ein besonders effektiver Staubabtransport erreicht wird, sodass in den meisten Fällen weder ein interner Ventilator noch ein externer Staubsauger notwendig ist. Dies wird im Wesentlichen dadurch erreicht, dass vom Werkzeug weggeschleuderte Partikel oder Schleifstaub zumindest teilweise direkt in das Innere des Staubabsaugrohrs geschleudert werden und nicht erst den Weg vom Inneren der Schutzhaube zur Öffnung des Staubabsaugrohrs finden müssen. Außerdem bildet der Teil des Staubabführrohrs, der die Ebene einer flachen Seite des Werkzeugs durchdringt, in der Regel eine gekrümmte Fläche, die eine Leitfläche bildet, und den durch die schnelle Rotation des Werkzeugs erzeugten Förderluftstrom mit nur geringem Energieverlust aus dem Inneren der Schutzhaube in das Staubabführrohr lenkt.

Das schräg zur Rotationsachse des Werkzeugs angeordnete Staubabführrohr ermöglicht ohne externes Absaugen einen guten Staubabtransport durch die gerichtete Eigenbewegung der Staubteilchen und erlaubt gute Bewegungsfreiheit beim Arbeiten. Durch die Über-Eck-Anordnung des Staubabführrohrs in nächster Nähe des Werkzeugaustritts aus einer Werkstückoberfläche wird der Schleifstaub besonders gut erfasst und abgeleitet.

Eine besonders vorteilhafte Umlenkung der Förderluft und der Partikel wird erreicht, indem das Werkzeug mit seinem radial äußersten Bereich eine Ausnehmung des Staubabführrohrs durchtritt. Es wird somit die Peripherie des scheibenförmigen Werkzeugs zumindest teilweise von einem Teil des Staubabführrohrs umgriffen. Hierdurch werden Förderluft und Partikel beidseitig der Rotationsebene des Werkzeugs direkt in das Staubabführrohr hineingelenkt. Die Ausnehmung kann beispielsweise als ein Schlitz ausgestaltet sein, in den die Peripherie des Werkzeugs eingreift. Die Geometrie - beispielsweise die Krümmung - des Teils des Staubabführrohrs, das die Ausnehmung bildet, kann von der Geometrie des angrenzenden Teils des Staubabführrohrs verschieden sein. So kann das Staubabführrohr beispielsweise in dem Teil, in dem es das Werkzeug umgreift, auf- oder umgebogen oder in einer anderen, dem Fachmann günstig erscheinenden Weise verformt sein.

Zweckmäßigerweise ist der Teil des Staubabführrohrs, der die Ebene der flachen Seite des Werkzeugs durchdringt, so angeordnet, dass durch das Werkzeug von einem Werkstück weggeführter Schleifstaub in eine Rotationsbewegung im Staubabführrohr versetzt wird. Durch das Auftreffen des Förderluftstroms mit dem Schleifstaub auf diesen Teil des Staubabführrohrs werden Luft und Schleifstaub derart in das Staubabführrohr weitergeleitet, dass sie im Staubabführrohr eine zyklonartige Wirbelbewegung vollführen. Der solcherart in Rotationsbewegung versetzte Förderluft- und Staubstrom kann genügend kinetische Energie aufweisen, um aus eigener Kraft das Staubabführrohr an dessen dem Werkzeug abgewandten Seite verlassen zu können.

Dadurch, dass sich das Staubabführrohr zu seiner zum Werkzeug weisenden Mündung hin verjüngt, ist die Eigenbewegung der Staubteilchen und die Ausblaswirkung durch die Luftbewegung durch die rotierende Schleifscheibe deutlich verbessert. Der Förderluftstrom strömt in Axialrichtung des Staubabführrohrs schnell durch die Engstelle an der Mündung des Staubabführrohrs und verlässt den Innenraum der Schutzhaube somit mit großer Geschwindigkeit. Führt die Luft außerdem eine Rotationsbewegung im Staubsaugrohr aus, so entwickelt der Luftstrom durch die Aufweitung des Staubabführrohrs in Richtung von der Schutzhaube weg eine Saugwirkung, die den Austritt der Luft aus der Schutzhaube in das Staubabführrohr begünstigt.

In vorteilhafter Ausgestaltung der Erfindung weist die Schutzvorrichtung eine Befestigungsvorrichtung zur Befestigung der Schutzhaube an der Handwerkzeugmaschine auf, wobei das Staubabführrohr relativ zur Befestigungsvorrichtung beweglich gelagert ist. Das Staubabführrohr kann auf diese Weise beweglich zum Werkzeug und damit unabhängig von der Eingrifftiefe des Werkzeugs in ein Werkstück in konstantem - beispielsweise sehr kleinem - Abstand zum Werkstück gehalten werden. Die Mündung des Staubabführrohrs kann dadurch sehr dicht an der Stelle positioniert werden, an der die Partikel das Werkstück verlassen, wodurch eine gute Abführung der Partikel erreicht wird.

Zweckmäßigerweise ist das Staubabführrohr an der Schutzhaube befestigt. Es ist auf diese Weise stabil und einfach herstellbar positioniert.

Ein besonders guter Schleifstaubabtransport kann erreicht werden, wenn die Schutzhaube dazu vorgesehen ist, in einem auf einem ebenen Werkstück in Betriebsstellung aufliegenden Zustand das Werkzeug in Verbindung mit dem Werkstück in einem von der Eindringtiefe des Werkzeugs in das Werkstück unabhängigen Umfang zu umschließen. Hierbei kann das Werkstück vollständig oder in einem vorbestimmten Umfang umschlossen sein, sodass beispielsweise durch ein Herausziehen des Werkzeugs aus dem Werkstück kein Staub oder nicht mehr Staub aus der Schutzhaube in die Umgebung austritt.

Eine Schutzvorrichtung, deren Schutzhaube das Werkzeug in Ruhestellung in axialer Richtung vollständig umschließt, gewährt eine hohe Arbeitssicherheit: Ein Bediener ist vor Verletzungen durch das Werkzeug wirksam geschützt. Dies gilt auch für eine Schutzvorrichtung, bei der sich das Werkzeug beim Austreten aus dem Werkstück vollständig in die Schutzhaube zurückzieht. Außerdem gewährt eine solche Schutzvorrichtung einen guten Schutz gegen den Austritt von Schleifstaub oder Partikeln. Der mit dem Werkzeug rotierende Staub wird mit dem sich in die Schutzhaube zurückziehenden Werkzeug in die Schutzhaube gezogen.

Wenn die Gleitkufe den Querschnitt des Austrittsbereichs im Bereich des Staubabführrohrs verengt, wird der Austritt von Luft aus der Schutzhaube heraus beeinträchtigt. Es bildet sich dem Inneren der Schutzhaube ein Überdruck, der die mit Partikeln oder Staub versetzte Luft zum Staubabführrohr drückt.

Zweckmäßigerweise verbleibt in der Schutzhaube oder zwischen Schutzhaube und Werkstück eine Lufteinlassöffnung, deren Größe unabhängig von der Eindringtiefe des Werkzeugs in das Werkstück ist. Auf diese Weise ist ein konstanter, von der Eindringtiefe des Werkzeugs in das Werkstück unabhängiger Luftstrom von der Lufteinlassöffnung zu einem Staubabsaugrohr und somit eine konstante Staubabsaugung möglich.

Bei Anordnung der Lufteinlassöffnung relativ zum Werkzeug gegenüber dem Staubabführrohr wird ein zum Staubabführrohr gerichteter Luftstrom erreicht, der den Eintrag von Staub in das Staubabführrohr begünstigt.

Durch ein innerhalb der Schutzhaube angeordnetes Drosselblech wird der Ausblaseffekt des Schleifstaubs weiter verbessert, da dort die durch die rotierende Schleifscheibe verwirbelte Luft gestaut wird und der Luftstrom am Staubabführrohr herausgeleitet wird. Das Drosselblech kann an der dem Staubabsaugrohr entgegengesetzten Seite angeordnet und beispielsweise an die Schutzhaube angeformt sein.

Ein weiterer Vorteil wird dadurch erreicht, dass die Schutzhaube ein Fenster aufweist, das einem Bediener eine Sicht auf das Werkzeug und insbesondere auf die einem Werkstück zugewandte Seite des Werkzeugs gewährt. Es ist damit eine besonders einfache und gute Kontrolle der Werkzeugposition im Werkstück möglich.

Zweckmäßigerweise weist die Schutzhaube einen Sehschlitz auf. Er kann beispielsweise durch eine Aussparung in der Schutzhaube oder durch eine Abschrägung eines Teils der Schutzhaube gebildet sein. Der auf die Schmalseite der Schleifscheibe gerichtete Sehschlitz sichert eine besser kontrollierte Handhabung des Winkelschleifers mit Schutzhaube vor allem zum zielgenauen Eingriff der Schleifscheibe in Mörtelfugen. Die Sichtkontrolle des Werkzeugs ist durch das Fenster in Verbindung mit einem Sehschlitz besonders gut. Als Sehschlitz kann die Lufteinlassöffnung Verwendung finden. Die durch den Sehschlitz angesaugte Luft bewirkt Turbulenzen, die das Fenster im Wesentlichen staubfrei halten. Bei einem Abtransport des Staubs auf der entgegengesetzten Seite des Fensters, z.B. durch ein dort angeordnetes Staubabführrohr, bleibt das Fenster durch die Luftturbulenzen im Wesentlichen staubfrei.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine Handwerkzeugmaschine mit einer erfindungsgemäßen Schutzvorrichtung in Arbeitsposition als Draufsicht,
- Fig. 2: die Handwerkzeugmaschine aus Fig. 1 von oben,
- Fig. 3: die Handwerkzeugmaschine aus Fig. 1 von der Gegenseite,
- Fig. 4: die Ansicht gemäß Fig. 3 um 90° um die senkrechte Achse gedreht,
- Fig. 5: die Ansicht gemäß Fig. 1 in Ruheposition,
- Fig. 6: die Ansicht gemäß Fig. 5 von der gegenüberliegenden Seite,
- Fig. 7: die Seitenansicht eines weiteren Ausführungsbeispiels einer Handwerkzeugmaschine mit einer erfindungsgemäßen Schutzvorrichtung in Ruheposition,
- Fig. 8: die Ansicht gemäß Fig. 7 von der gegenüberliegenden Seite,
- Fig. 9: die Ansicht gemäß Fig. 8 um 90° um die Längsachse gedreht,
- Fig. 10: die Ansicht gemäß Fig. 7 in Arbeitsposition,
- Fig. 11: ein Detail des Staubabsaugrohrs gemäß Fig. 7 und 10,
- Fig. 12: eine räumliche Darstellung gemäß Fig. 1,
- Fig. 13: eine räumliche Unteransicht gemäß Fig. 1 und 2,
- Fig. 14: eine Ansicht des verstellbaren Anschlags zur Schnitttiefenbegrenzung,
- Fig. 15: ein Detail des Schnitttiefenanschlags,
- Fig. 16: einen Ausschnitt des Drehdeckels,
- Fig. 17: eine Unteransicht der Winkelschleiferschutzhaube gemäß Fig. 1,
- Fig. 18: eine Seitenschale der Schutzhaube von außen betrachtet,
- Fig. 19: die Gehäuseschale gemäß Fig. 18 von innen gesehen und
- Fig. 20: eine räumliche Darstellung des vorderen Bereichs der Schleifmaschine mit quer zum Schleifwerkzeug abstehendem Staubabführrohr.

### Beschreibung der Ausführungsbeispiele

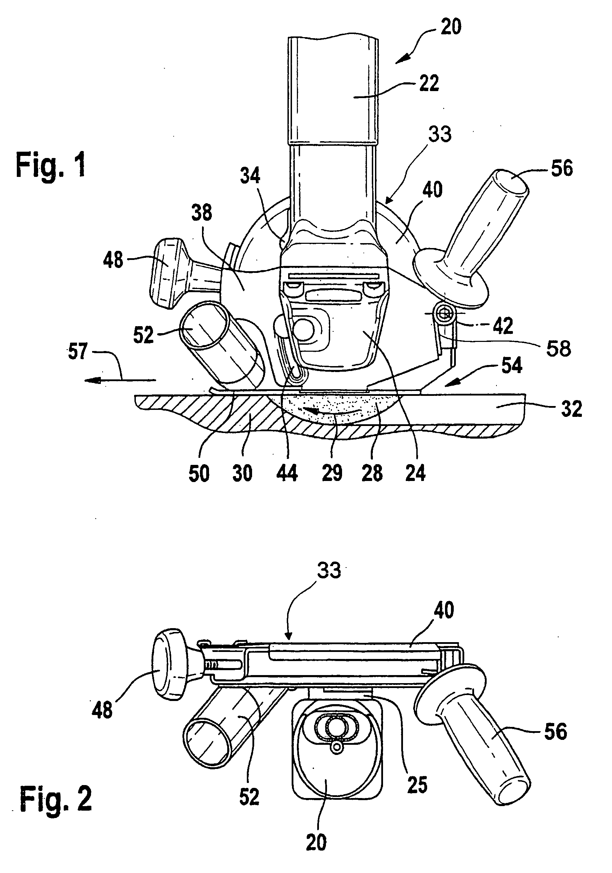

Figur 1 zeigt die Seitenansicht eines Winkelschleifers 20, dessen Motorgehäuse 22 sich im Wesentlichen senkrecht nach oben erstreckt und einen nicht dargestellten Motor enthält.

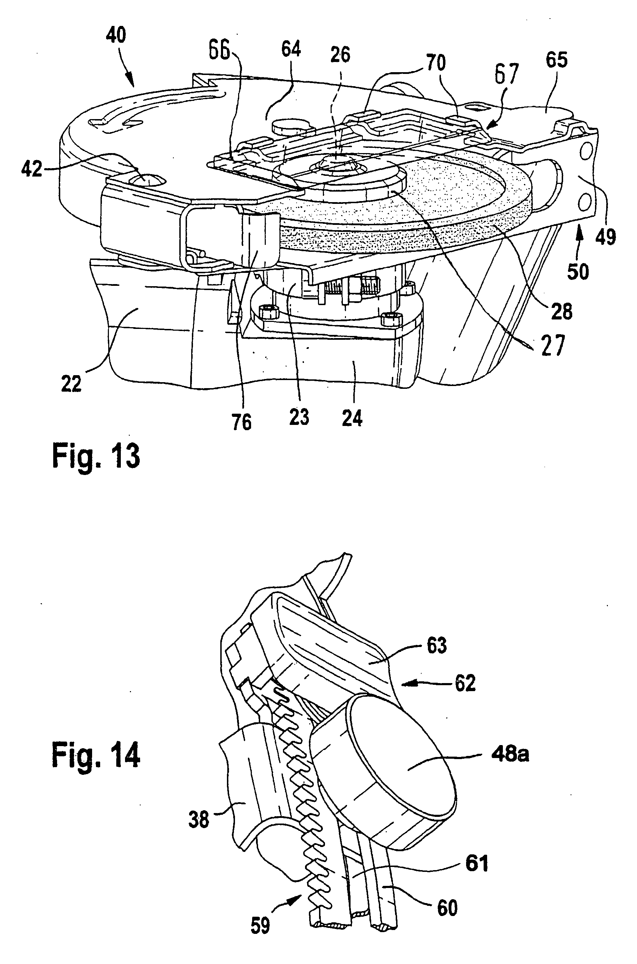

In Betrachtungsrichtung senkrecht nach unten schließt sich an das Motorgehäuse 22 ein Getriebegehäuse 24 an, dessen Abtriebswelle 26 (Fig. 13) senkrecht zur Zeichenebene verläuft und an ihrem freien Ende ein Werkzeug trägt. Das Werkzeug ist eine Schleifscheibe 28. Diese dreht sich in Drehrichtung 29 im Uhrzeigersinn und taucht in ein Werkstück 30, in das sie von rechts kommend eine Nut 32 nachschleift.

Auf der in Betrachtungsrichtung linken Seite trägt das Motorgehäuse 22 eine Schiebetaste 34 eines Ein- und Ausschalters.

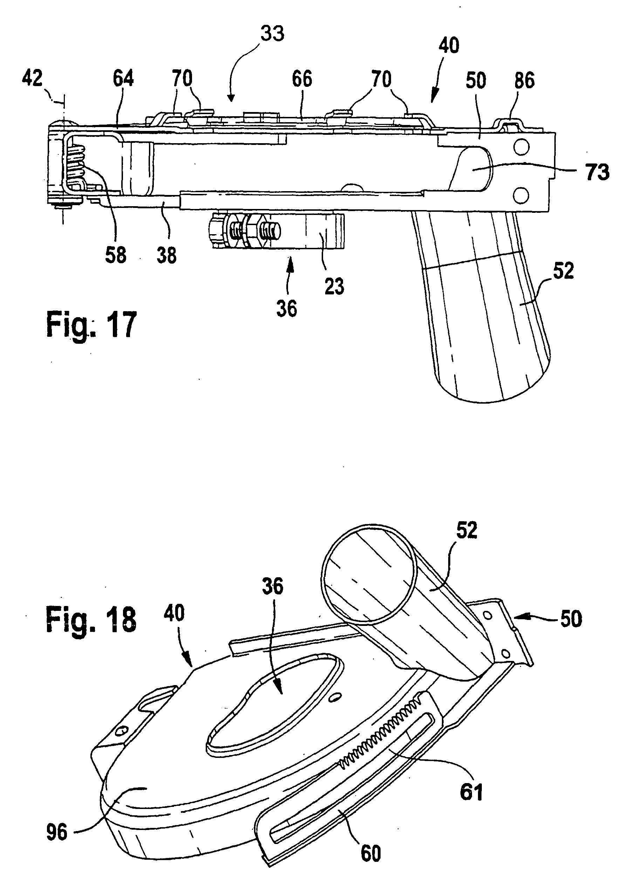

Am Winkelschleifer 20 ist eine Schutzvorrichtung 33 befestigt. Sie umfasst eine Befestigungsvorrichtung und eine Schutzhaube 40. Die Befestigungsvorrichtung ist als ein Schwenkarm 38 ausgestaltet. Der Schwenkarm 38 ist mit einer passenden Aufnahmeöffnung 36 (Fig. 18) mit einer zylindrisch ausgestalteten, axialen Verlängerung des Getriebegehäuses 24, dem Hals 25, befestigt. Der Schwenkarm 38 wiederum ist an der Schutzhaube 40 befestigt und ist relativ zur Schutzhaube 40 um einen Drehpunkt 42 auf- und abschwenkbar. Hierbei werden Schwenkarm 38 und Schutzhaube 40 durch einen in einem Führungsschlitz 44 des Schwenkarms 38 an der Schutzhaube 40 sitzenden Führungsbolzen 46 sicher gegeneinander geführt. Der Schwenkarm 38 trägt in Betrachtungsrichtung links einen Knauf 48, an dem der Winkelschleifer 20 mit der Schutzhaube 40 auf einem Werkstück 30 führbar ist. Der Knauf 48 wird außerdem zum Einstellen der Schnitttiefe von Hand ergriffen, wobei der Schwenkarm 38 auf- und abverstellbar ist. Auf dem Werkstück 30 sitzt die Schutzhaube 40 mit einem auf ihrer Unterseite befindlichen Führungsmittel, einem kufenartigen Schlitten 50 auf. Das Führungsmittel sorgt für senkrechtes Ausrichten der Schutzhaube 40 gegenüber der Werkstückoberfläche.

In Betrachtungsrichtung links unten trägt die Schutzhaube 40 unmittelbar angrenzend an den Schlitten 50 ein Staubabführrohr 52. Durch dieses hindurch wird beim Schleifen anfallender Staub abtransportiert, z.B. über ein eingeschobenes Schlauchstück und eine daran angeschlossene Staubabsaugvorrichtung. Das Staubabführrohr 52 ist in einem Winkel von 45° zur Rotationsachse der Schleifscheibe angeordnet.

In Betrachtungsrichtung rechts unten ist die Schutzhaube 40 schräg nach oben abgewinkelt, sodass eine Sichtöffnung 54 gebildet wird, durch die der Bediener der Maschine den Eingriff der Schleifscheibe 28 in das Werkstück 30 bzw. die Nut 32 kontrollieren kann. In Betrachtungsrichtung rechts oben ragt schräg von der Schutzhaube 40 ein Handgriff 56 weg, an dem die Einheit aus Winkelschleifer 20 und Schutzhaube 40 bequem entlang dem Werkstück 30 führbar ist.

Zwischen dem Schwenkarm 38 und der Schutzhaube 40 ist am Drehpunkt 42 ein Federmechanismus angeordnet. Der Federmechanismus umfasst eine vorgespannte Schenkelfeder 58, die den Schwenkarm 38 nach oben zu drücken sucht. Dadurch muss der Winkelschleifer 20 gegenüber der Schutzhaube 40 gemäß Figur 1 entgegen dem Uhrzeigersinn gegen die Federkraft der Schenkelfeder 58 verschwenkt werden, um in seine Arbeitsposition zu gelangen, in der die Schleifscheibe 28 unten aus dem Durchtrittsschlitz 73 (Figur 17) bzw. dem Schlitten 50 heraustritt, um in das Werkstück 30 eindringen zu können.

Wird der Winkelschleifer 20 mit der Schutzhaube 40 vom Werkstück 30 abgehoben, zieht die Schenkelfeder 58 die Schutzhaube 40 gegenüber dem Schwenkarm 38 nach unten, sodass die Schleifscheibe 28 vollständig innerhalb der Schutzhaube 40 verschwindet.

Die übliche Arbeitsweise mit dem Winkelschleifer 20 ist in Vorschubrichtung 57 gerichtet, sodass im Verhältnis zur Drehrichtung 29 der Schleifscheibe 28 eine Gegenlaufbewegung von Werkstück 30 und Drehrichtung 29 vorliegt.

Die in Figur 2 gezeigte Ansicht von oben zeigt die schräge Anordnung des Handgriffs 56 an der Schutzhaube 40 und den schrägen Verlauf des Staubabführrohrs 52. Darüber hinaus ist der Hals 25 des Getriebegehäuses 24 erkennbar, der in die Aufnahmeöffnung 36 des Schwenkarms 38 eingreift.

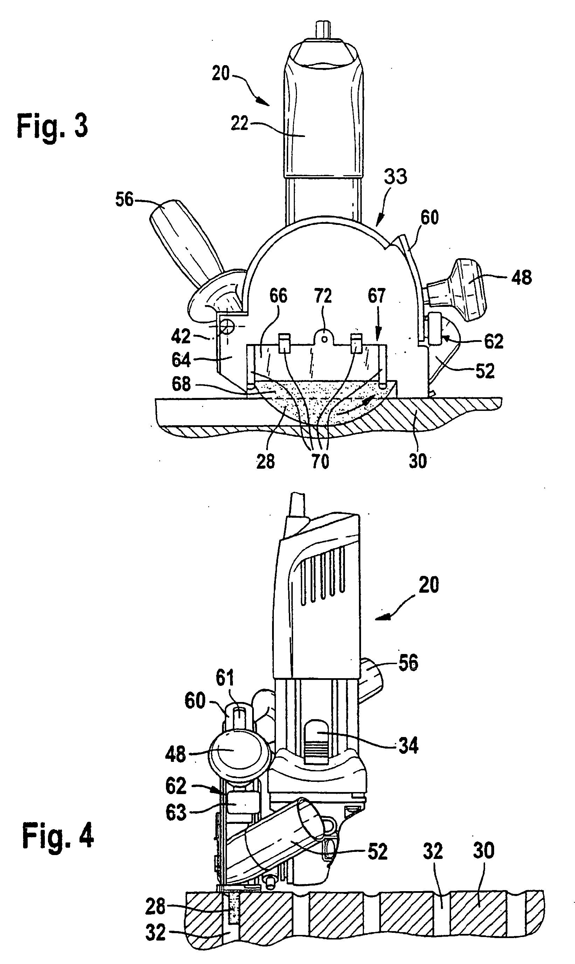

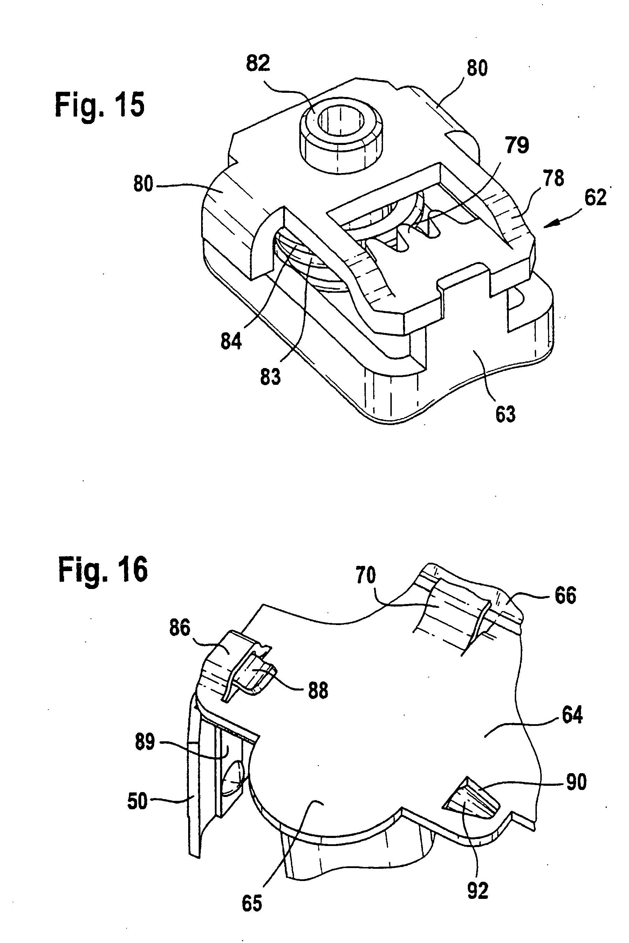

Figur 3 zeigt den Winkelschleifer 20 mit Schutzhaube 40 gemäß Figur 1 von der gegenüberliegenden Seite ebenfalls in Arbeitsposition mit weit nach unten austretender Schleifscheibe 28. Erkennbar ist in Figur 3 ein Führungslineal 60, an dem der Knauf 48 geführt ist und durch Drehen um seine Längsachse feststellbar ist. Weiter ist unterhalb des Knaufs 48 ein Schnitttiefenanschlag 62 sichtbar, der ebenfalls im Führungslineal 60 verschiebbar ist und durch Tastendruck in vorgewählten, gestuften Positionen formschlüssig arretierbar ist. Der Schnitttiefenanschlag 62 ist unverlierbar am Führungslineal 60 befestigt (Figuren 14, 15).

Die Schutzvorrichtung 33 umfasst zwei gegeneinander bewegliche Einheiten, nämlich die Schutzhaube 40 und einen Drehdeckel 64. Der Drehdeckel 64 ist auf der gegenüberliegenden Seite des Schwenkarms 38 angeordnet und ist zur Abdeckung der Schleifscheibe 28 vorgesehen. Der Drehdeckel 64 ist gemeinsam mit der Schutzhaube 40 um den Drehpunkt 42 schwenkbar. Für einen Wechsel der Schleifscheibe 28 wird der Drehdeckel 64 von der Betriebsstellung in Betrachtungsrichtung nach oben und links in eine Werkzeugwechselstellung geschwenkt. In dieser nach außen geschwenkten Werkzeugwechselstellung ist das freie Ende der Abtriebswelle 26 bzw. die Befestigungsmutter 27 (Figur 13) gut zugänglich, sodass nach Lösen der Befestigungsmutter 27 die Schleifscheibe 28 in axialer Richtung aus der Zeichenebene heraus entnommen werden kann.

Der Drehdeckel 64 trägt in seinem unteren Bereich in einer viereckigen Ausnehmung ein Fenster 66. Zwischen dem Fenster 66 und dem Schlitten 50 befindet sich eine seitliche Lufteinlassöffnung 68, durch die hindurch Luft eintreten kann, die die von der rotierenden Schleifscheibe 28 ausgeblasene Luft zum Abtransport von Schleifstaub ersetzt. Die Lufteinlassöffnung 68 ist relativ zur Schleifscheibe 28 gegenüber dem Staubabführrohr 52 angeordnet. In einem auf dem ebenen Werkstück 30 in Betriebsstellung aufliegenden Zustand weist die Lufteinlassöffnung 68 eine von der Eindringtiefe der Schleifscheibe 28 in das Werkstück 30 unabhängige Größe auf, da der Schlitten 50, der zusammen mit der Schutzhaube 40 die Lufteinlassöffnung 68 begrenzt, unabhängig von der Eindringtiefe der Schleifscheibe 28 in das Werkstück 30 immer flach auf dem Werkstück 30 aufliegt.

Das Fenster 66 ist in am Drehdeckel 64 befestigte Rahmensegmente 70 eingeschoben und mit einer überstehenden Rastzunge 72 unverlierbar mit dem Drehdeckel 64 verrastet.

Figur 4 zeigt eine um 90° gedrehte Seitenansicht des Winkelschleifers 20 gemäß Figur 3, wobei gegenüber den vorhergehenden Figuren die Ausgestaltung des Führungslineals 60 mit einem zentralen Schlitz 61 - zur vertikalen Schwenkführung des Knaufs 48 bzw. zum Verschwenken des Schnitttiefenanschlags 62 mit dessen Drucktaste 63 - sichtbar ist. Deutlich ist auch der Eingriff der Schleifscheibe 28 in die Nut 32, die als Mörtelfuge ausgebildet ist, sichtbar. Die übrigen zuvor erläuterten Einzelheiten sind per Bezugszeichen bezeichnet aber nicht nochmals erwähnt.

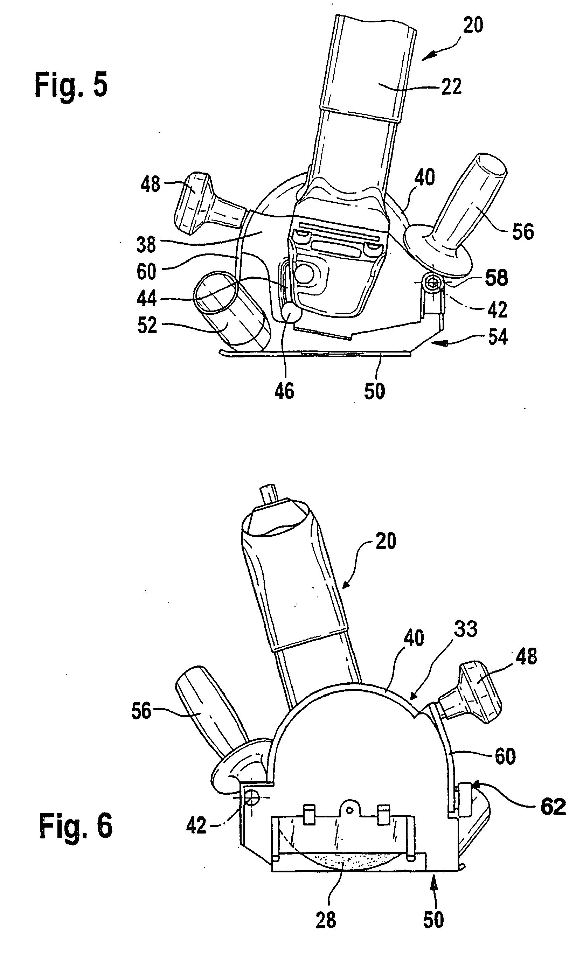

Figur 5 zeigt den Winkelschleifer 20 gemäß Figur 1 mit der Schutzhaube 40 in Ruheposition, in der die Schleifscheibe 28 innerhalb der Schutzhaube 40 verschwunden ist, weil der Schwenkarm 38 gegenüber der Schutzhaube 40 nach oben verschwenkt ist. Dies wird beim Vergleich der Relativlage des Führungsbolzens 46 zum Führungsschlitz 44 gemäß Figur 5 im Vergleich zu Figur 1 besonders deutlich.

Figur 6 zeigt, wie die Schleifscheibe 28 hinter dem Schlitten 50 sitzend innerhalb der Kontur der Schutzhaube 40 angeordnet ist.

In den Figuren 5 und 6 ist die Ruheposition der Schutzhaube 40 daran erkennbar, dass der Knauf 48 in Betrachtungsrichtung am oberen Anschlag des Führungslineals 60 sitzt.

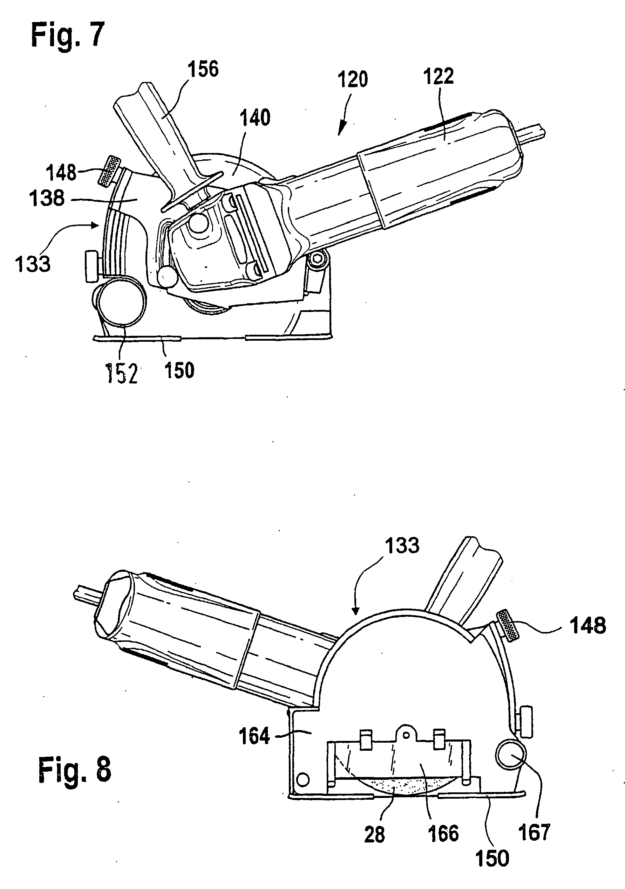

Die Figuren 7 und 8 zeigen ein gegenüber dem der Figuren 1 bis 6 geringfügig geändertes Ausführungsbeispiel, mit einer Schutzvorrichtung 133, bei der ein rechtwinklig von der Schutzhaube 140 wegstehendes Staubabführrohr 152 vorgesehen ist, das zur Absaugung mittels gesondertem Staubsauger vorgesehen ist. Darüber hinaus ist ein länglicher, stielartiger Handgriff 156 unmittelbar am Winkelschleifer 120 angebracht, um eine Zweihandbedienung des Winkelschleifers 120 zu ermöglichen, wobei eine Hand am Handgriff 156 und die andere Hand am Motorgehäuse 122 angreifen kann. Darüber hinaus ist der Schwenkarm 138 statt mit einem Knauf mit einer Rändelmutter 148 versehen, mit der die vorgewählte Schnitttiefe einstellbar ist.

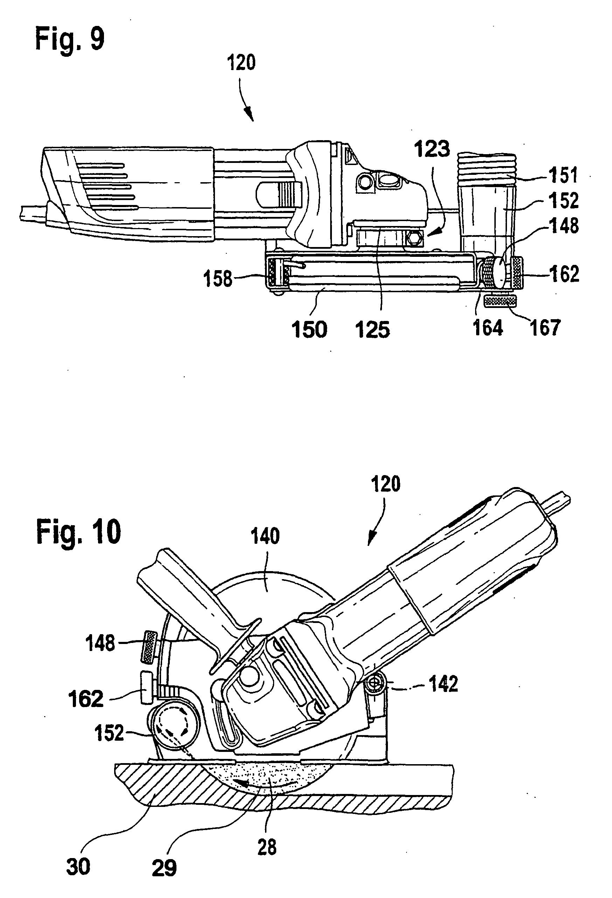

Auf ihrer Unterseite trägt die Schutzhaube 140 einen Schlitten 150 zum Führen auf einem in Figur 10 dargestellten Werkstück 30.

Figur 8 zeigt die Ansicht gemäß Figur 7 von der gegenüberliegenden Seite, wobei im Unterschied zu Figur 3 des ersten Ausführungsbeispiels das Fenster 166 mittels einer Rändelmutter befestigbar ist.

Die Figuren 7 und 8 zeigen den Winkelschleifer 120 mit der Schutzhaube 140 in Ruheposition, d.h. mit in die Schutzhaube 140 eingezogener Schleifscheibe 28, während die Figuren 9 und 10 den gleichen Winkelschleifer 120 in Arbeitsposition, d.h. mit unter dem Schlitten 150 heraustretender Schleifscheibe 28 zeigen.

Figur 9 zeigt deutlich eine Spannschelle 123, die einen Kragen der Schutzhaube 140 fest am Hals 125 des Winkelschleifers 120 festklemmt. Die Schutzhaube 140 ist durch Lösen einer Sechskantschraube und durch ein Öffnen der Spannschelle 123 vom Hals 125 des Winkelschleifers 120 leicht zu lösen, wenn zuvor die Schleifscheibe 28 entfernt wurde. Weiter sind die Rändelmutter 167 zum Festhalten des Drehdeckels 164 an der Schutzhaube 140, die Rändelmutter 148 zum Einstellen und Lösen der vorgewählten Schnitttiefe sowie der mittels Rändelmutter 162 einstellbare Schnitttiefenanschlag sichtbar.

Figur 9 zeigt deutlich die Schenkelfeder 158, mit der der Winkelschleifer 120 gegenüber der Schutzhaube 140 um den Drehpunkt 142 selbstständig in Ruhestellung verschwenkt wird. Darüber hinaus ist ein Absaugschlauch 151 zum Anschluss an einen Staubsauger erkennbar, mit dem der Schleifstaub gut abtransportierbar ist.

Figur 10 zeigt den Winkelschleifer 120 in Arbeitsstellung, wobei in Drehrichtung 29 der Schleifscheibe 28 tangential von der Austrittsstelle der Schleifscheibe 28 aus dem Werkstück 30 Schleifstaub an die Innenwand des Staubabführrohrs 152 geschleudert wird und von dort über den Absaugschlauch 151 leicht absaugbar ist.

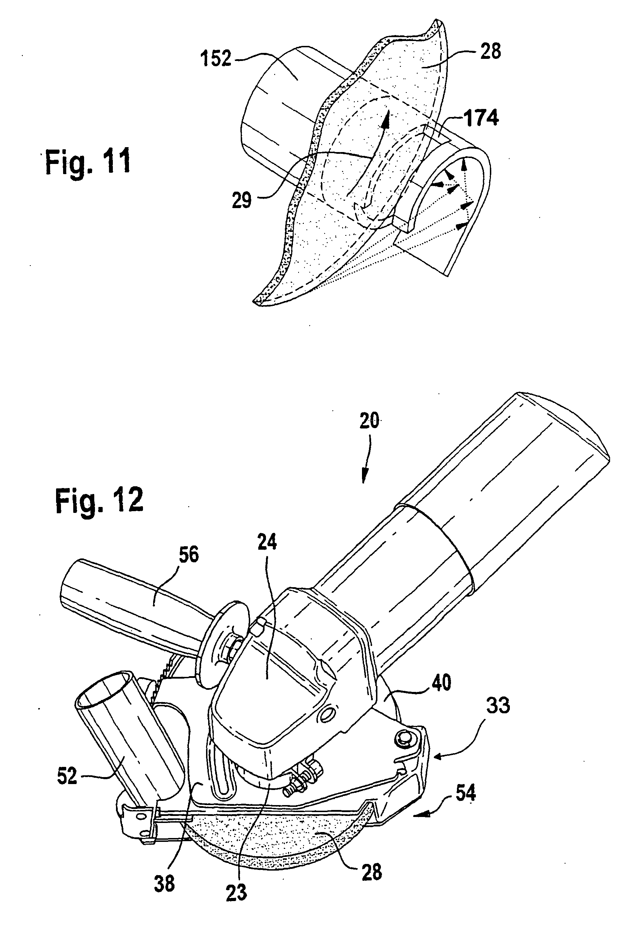

Figur 11 zeigt die Einzelheit des Staubabführrohrs 152 in seiner Lage bezüglich der Schleifscheibe 28. Darin ist zu erkennen, dass der radial äußerste Bereich der Schleifscheibe 28 in eine Ausnehmung 174 des Staubabführrohrs 152 ragt. Ein Teil des Staubabführrohrs 152 durchdringt somit die ins Unendliche fortgesetzt gedachten Ebenen der beiden flachen Seiten der Schleifscheibe 28. Die Ausnehmung 174 ist so gestaltet, dass ein Teil des Staubabführrohrs 152 die Schleifscheibe 28 hintergreift. Die Ausnehmung 174 ist somit schlitzförmig geformt.

Der von der Schleifscheibe 28 erzeugte Förderluftstrom gelangt gemeinsam mit Staubpartikeln entsprechend den Pfeilen auf die gekrümmte Fläche des Teils des Staubabführrohrs 152, der durchdringt die Ebenen der beiden flachen Seiten der Schleifscheibe 28 durchdringt. Auf diese Prallfläche mit hoher Geschwindigkeit auftreffend wird der Förderluftstrom mit dem Schleifstaub derart in das Staubabführrohr 152 weitergeleitet, dass er im Staubabführrohr 152 eine zyklonartige Wirbelbewegung vollführt. Der solcherart in Rotationsbewegung versetzte Förderluft- und Staubstrom weist genügend kinetische Energie auf, um aus eigener Kraft das Staubabführrohr 152 an dessen dem Winkelschleifer 20 abgewandten Seite verlassen können. Es kann jedoch sicherheitshalber ein Staubsauger nachgeschaltet werden, um in besonderen Arbeitspositionen des Winkelschleifers 120 ein Verstopfen des Staubabführrohrs 152 zu verhindern.

Figur 12 zeigt eine Seitenansicht eines weiteren Ausführungsbeispiels, dessen Ausgestaltung im Wesentlichen mit dem Winkelschleifer 20 aus den Figuren 1 bis 4 übereinstimmt. Lediglich der stielartige Handgriff 56 ist unmittelbar am Getriebegehäuse 24 des Winkelschleifers 20 angeschraubt, und es fehlt der Knauf. Besonders gut ist die Spannschelle 23 mit der Spannschraube zu erkennen, die den Winkelschleifer 20 gegenüber der Schutzhaube 40 festhalten.

Figur 13 zeigt eine räumliche Draufsicht etwa parallel zur Schleifscheibe 28 von der Unterseite der Schutzhaube 40 her. Besonders deutlich ist die Ausgestaltung des Schlittens 50 mit einer Gleitkufe 49 sichtbar. Der Schlitten 50 im Austrittsbereich der Schutzhaube 40 angeordnet, in dem die Schleifscheibe während des Betriebs teilweise aus der Schutzhaube 40 austritt. Die Gleitkufe 49 des Schlittens 50 verengt den Querschnitt des Austrittsbereichs der Schutzhaube 40. Hierdurch wird der Luftstrom in der Schutzhaube 40 zum Staubabsaugrohr 52 hin begünstigt.

In Betrachtungsrichtung links ist benachbart zur Schleifscheibe 28 ein Drosselblech 76 angeordnet, das radial bis sehr nah an die Peripherie der Schleifscheibe 28 reicht und einen durch die rotierende Schleifscheibe 28 beim Schleifen bewirkte Luftbewegung drosselt. Hierdurch entsteht im Inneren der Schutzhaube 40 ein gewisser Überdruck, der durch das Staubabführrohr 52 hindurch bläst und anfallenden Schleifstaub mitnimmt.

Erkennbar ist die Spannschelle 23 mit der Spannmutter zum Befestigen der Schutzhaube 40 am Getriebegehäuse 24. Oben ist die Schutzhaube 40 waagerecht mit dem aus Blech bestehenden Drehdeckel 64 abgedeckt, der in Betrachtungsrichtung rechts einen runden, hervorstehenden Schwenkgriff 65 zur Betätigung mit dem Daumen trägt.

In Betrachtungsrichtung links trägt der Drehdeckel 64 einen eingeprägten Drehrichtungspfeil, der in Betrachtungsrichtung nach links weist. Dies ist die vorgesehene Drehrichtung zum Hochschwenken des Drehdeckels 64 in seine Löseposition zum Lösen der Schleifscheibe 28. Außerdem zeigt der Pfeil zugleich die Drehrichtung der Schleifscheibe 28 an. Der Drehdeckel 64 ist um den Drehpunkt 42 um etwa 180° nach links zu verschwenken, damit die Schleifscheibe 28 freiliegt und nach Lösen der Befestigungsmutter 27 ausgewechselt werden kann.

Deutlich erkennbar sind auch die Rahmensegmente 70 zur Aufnahme des Fensters 66 in der entsprechenden Ausnehmung.

Figur 14 zeigt das Führungslineal 60 als festen Teil der Schutzhaube 40, gegenüber der der Schwenkarm 38 schwenkverstellbar ist. Die Position des Schwenkarms 38 relativ zum Führungslineal 60 ist mit der Rändelschraube 48a bzw. in Figur 1 bis 4 mit dem Knauf 48 durch Drehen um ihre Achse feststellbar bzw. lösbar.

Die Drucktaste 63 des Schnitttiefenanschlags 62 ist gegenüber der zahnstangenartigen Außenkontur 59 durch ein spiegelbildliches Profil verrastbar und federnd durch Tastendruck auf die Drucktaste 63 außer Eingriff bringbar. Ist die Drucktaste 63 entlastet, rastet sie selbsttätig in der jeweiligen Position mit ihrem Gegenprofil 79 in die zahnstangenartige Außenkontur 59 ein. Der Schnitttiefenanschlag 62 ist entlang des Führungslineals 60 an beliebiger Stelle festlegbar, sodass der Schwenkarm 38 mit seiner Rändelschraube 48a nur noch bis an diesen heranschwenkbar ist. Damit ist eine reproduzierbare Schnitttiefe festgelegt.

Figur 15 zeigt die Einzelheit des Schnitttiefenanschlags 62 mit seiner Drucktaste 63 und einem Profilträger 78 aus Blech, der das Gegenprofil 79 zum Eingriff in die zahnstangenartige Außenkontur 59 des Führungslineals 60 bildet. Der Profilträger 78 trägt auf gegenüberliegenden Seiten je eine Lasche 80, die zum geführten Eingriff in den zentralen Schlitz 61 des Führungslineals 60 passt. Der Profilträger 78 wird quer von einem Führungsbolzen 82 durchtreten, entlang dessen er zur Drucktaste 63 hin und von dieser weg verschiebbar ist. Die Drucktaste 63 ist durch eine Spiralfeder 83 elastisch vorgespannt.

Die Drucktaste 63 und der Profilträger 78 sind fest gegeneinander verspannt, wobei zwischen diesen beiden im montierten Zustand das Führungslineal 60 entlang läuft. Dabei kommt die Spiralfeder 83 mit einer Stützscheibe 84 zur Anlage oben auf das Führungslineal 60 und bei Betätigung der Drucktaste 63 verschiebt sich diese axial gefedert gegenüber dem Führungslineal 60, sodass dabei der Profilträger 78 mit seinem Gegenprofil 79 aus der Außenkontur 59 des Führungslineals 60 austreten kann.

Figur 16 zeigt einen Ausschnitt einer räumlichen Draufsicht auf den Schwenkgriff 65 des Drehdeckels 64. Dieser ist durch ein Stück des Drehdeckels 64 gebildet. In Betrachtungsrichtung links weist der Drehdeckel 64 eine nach oben herausgebogene Lasche 86 auf, durch die eine Federzunge 88 einer L-förmigen Blattfeder 89 hindurchtritt, die mit dem Schlitten 50 flächig verbunden ist, in diesem Fall genietet.

In Betrachtungsrichtung oben ist eines der Rahmensegmente 70 erkennbar, in die das Fenster 66 einschiebbar ist.

In Betrachtungsrichtung rechts ist eine Ausnehmung 90 des Drehdeckels 64 erkennbar, die überrastend einen Rastnocken 92 übergreift, der aus der benachbarten Seitenwand der Schutzhaube 40 herausgeprägt ist. Durch Schwenken des Drehdeckels 64 mittels des Schwenkgriffs 65 in Betrachtungsrichtung nach rechts kann die Lasche 86 über die Federzunge 88 gleiten und die Ausnehmung 90 den Rastnocken 92 überwinden, sodass anschließend mit geringem Kraftaufwand der Drehdeckel 64 um den Drehpunkt 42 (Figur 13) verschwenkt werden kann.

Figur 17 zeigt eine Unteransicht der Schutzhaube 40 mit der Draufsicht auf den kufenartigen Schlitten 50. Dessen Fläche bildet einen Durchtrittsschlitz 73 zum Aus- und Eintritt der nicht gezeigten Schleifscheibe 28.

In Betrachtungsrichtung nach unten ist die Spannschelle 23 mit der Durchtrittsöffnung 36 zur Aufnahme des Halses 25 des Winkelschleifers 20 (Figur 1) angeordnet. In Betrachtungsrichtung links außen ist die Schenkelfeder 58 erkennbar, die den Schwenkarm 38 um den Drehpunkt 42 zu schwenken sucht, während das Staubabführrohr 52 in Betrachtungsrichtung nach rechts unten ragt. Das Staubabführrohr 52 verjüngt sich zu seiner der Schleifscheibe 28 weisenden Mündung hin. Hierdurch wird erreicht, dass der von der Schleifscheibe 28 erzeugte Förderluftstrom in Axialrichtung des Staubabführrohrs 52 schnell durch die Engstelle an der Mündung des Staubabführrohrs 52 strömt. Er verlässt den Innenraum der Schutzhaube 40 somit mit großer Geschwindigkeit, wobei er die bei Figur 11 beschriebene Rotationsbewegung ausführt. Durch die Aufweitung des Staubabführrohrs 52 in Richtung von der Schutzhaube 40 weg entwickelt der Luftstrom aufgrund seiner Rotation eine Saugwirkung, die den Austritt der Luft aus der Schutzhaube in das Staubabführrohr 52 begünstigt.

Oben ist die Schutzhaube 40 mit dem Drehdeckel 64 abgedeckt, dessen Rahmensegmente 70 nach oben ragen und das Fenster 66 halten. Außerdem ist oben rechts auf dem Drehdeckel 64 die Lasche 86 sichtbar.

Figur 18 zeigt Einzelheiten des feststehenden, schalenartigen Seitenteils 96 der Schutzhaube 40, das in Betrachtungsrichtung rechts das angeschweißte Führungslineal 60 trägt.

Oben rechts ist der kufenartige Bereich des Schlittens 50 und das Staubabführrohr 52 erkennbar. Hier ist besonders deutlich die Anordnung des Saugrohrs in der äußersten Ecke der Schutzhaube 40, am Entstehungsort des Schleifstaubs beim Benutzen des Winkelschleifers 20 erkennbar, durch das hindurch sich anfallender Schleifstaub durch die von der Schleifscheibe 28 erteilte hohe Eigengeschwindigkeit in Verbindung mit dem durch die Schleifscheibe 28 erzeugten Blasluftstrom selbst hindurch bewegt.

Etwa mittig trägt das Seitenteil 96 die Durchtrittsöffnung 36, durch die der Hals 25 des Winkelschleifers 20 hindurchragt. Die Durchtrittsöffnung 36 ist ein Langloch, die das Auf- und Abschwenken des Winkelschleifers 20 bzw. des Halses 25 gegenüber der Schutzhaube 40 erlaubt bis zum Erreichen der maximalen Schnitttiefe.

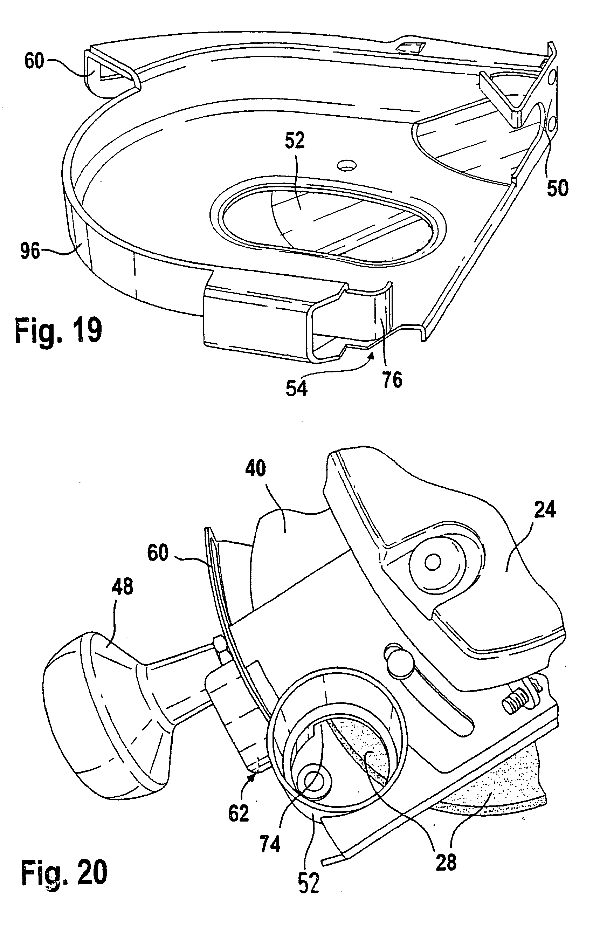

Figur 19 zeigt das Seitenteil 96 von der Innenseite aus betrachtet, wobei der Schlitten 50, das Staubabführrohr 52 und das Führungslineal 60 besonders deutlich erkennbar sind. Darüber hinaus ist an der äußersten Seite des Seitenteils 96 das Drosselblech 76 und die Sichtöffnung 54 erkennbar.

Figur 20 zeigt eine Seitenansicht der Schutzhaube 40 ausschnittsweise im Bereich des Getriebegehäuses 24 des Winkelschleifers 20. Deutlich erkennbar ist hier auch der Knauf 48 zum Führen der Schutzhaube 40 bzw. zum Einstellen einer vorgewählten Schnitttiefe und der Schnitttiefenanschlag 62.

Weiter ist das Staubabführrohr 52 erkennbar, in dessen Umfangskontur durch die Ausnehmung 74 die Schleifscheibe 28 mit ihrem radial äußeren Bereich hindurchtritt.

### Bezugszeichen

- 20: Winkelschleifer
- 22: Motorgehäuse
- 23: Spannschelle
- 24: Getriebegehäuse
- 25: Hals
- 26: Antriebswelle
- 27: Befestigungsmutter
- 28: Schleifscheibe
- 29: Drehrichtung
- 30: Werkstück
- 32: Nut
- 33: Schutzvorrichtung
- 34: Schiebetaste
- 36: Aufnahmeöffnung
- 38: Schwenkarm
- 40: Schutzhaube
- 42: Drehpunkt
- 44: Führungsschlitz
- 46: Führungsbolzen
- 48: Knauf
- 48a: Rändelschraube
- 49: Gleitkufe
- 50: Schlitten
- 52: Staubabführrohr
- 54: Sichtöffnung
- 56: Handgriff
- 57: Vorschubrichtung
- 58: Schenkelfeder
- 59: Außenkontur
- 60: Führungslineal
- 61: Schlitz
- 62: Schnitttiefenanschlag
- 63: Drucktaste
- 64: Drehdeckel
- 65: Schwenkgriff
- 66: Fenster
- 68: Lufteinlassöffnung
- 70: Rahmensegment
- 72: Rastzunge
- 73: Durchtrittsschlitz
- 74: Ausnehmung
- 76: Drosselblech
- 78: Profilträger
- 79: Gegenprofil
- 80: Lasche
- 82: Führungsbolzen
- 83: Spiralfeder
- 84: Stützscheibe
- 86: Lasche
- 88: Federzunge
- 89: Blattfeder
- 90: Ausnehmung
- 92: Rastnocken
- 96: Seitenteil
- 120: Winkelschleifer
- 122: Motorgehäuse
- 123: Spannschelle
- 125: Hals
- 133: Schutzvorrichtung
- 138: Schwenkarm
- 140: Schutzhaube
- 142: Drehpunkt
- 148: Rändelmutter
- 150: Schlitten
- 152: Staubabführrohr
- 156: Handgriff
- 158: Schenkelfeder
- 162: Rändelmutter
- 164: Drehdeckel
- 166: Fenster
- 167: Rändelmutter
- 174: Ausnehmung

## Patentansprüche

1. Schutzvorrichtung (33) für eine Handwerkzeugmaschine, insbesondere für eine Schleifhandwerkzeugmaschine, mit einer Schutzhaube (40), die dazu vorgesehen ist, ein scheibenförmiges, drehendes Werkzeug zumindest teilweise zu umgreifen, und mit einem Staubabführrohr (52), dessen Längsachse in einem Winkel von bis zu 80° zur Rotationsachse des Werkszeugs angeordnet ist, wobei ein Teil des Staubabführrohrs (52) die Ebene einer flachen Seite des Werkzeugs durchdringt, die Schutzhaube (40) einen Austrittsbereich aufweist, in dem das Werkzeug während des Betriebs teilweise aus der Schutzhaube (40) austritt, und die Schutzhaube (40) im Austrittsbereich eine Gleitkufe (49) umfasst, **dadurch gekennzeichnet, dass** das Staubabführrohr (52) fest mit der Gleitkufe (49) verbunden ist.

2. Schutzvorrichtung nach Anspruch 1, **dadurch gekennzeichnet, dass** das Werkzeug mit seinem radial äußersten Bereich eine Ausnehmung (74, 174) des Staubabführrohrs (52) durchtritt.

3. Schutzvorrichtung nach Anspruch 1 oder 2, **dadurch gekennzeichnet, dass** der Teil des Staubabführrohrs (52), der die Ebene der flachen Seite des Werkzeugs durchdringt, so angeordnet ist, dass durch das Werkzeug von einem Werkstück (30) weggeführter Schleifstaub in einer Rotationsbewegung im Staubabführrohr (52) versetzt wird.

4. Schutzvorrichtung nach einem der vorhergehenden Ansprüche, **dadurch gekennzeichnet, dass** sich das Staubabführrohr (52) zu seiner zum Werkzeug weisenden Mündung hin verjüngt.

5. Schutzvorrichtung nach einem der vorhergehenden Ansprüche, **gekennzeichnet durch** eine Befestigungsvorrichtung zur Befestigung der Schutzhaube (40) an der Handwerkzeugmaschine, wobei das Staubabführrohr (52) relativ zur Befestigungsvorrichtung gelagert ist.

6. Schutzvorrichtung nach einem der vorhergehenden Ansprüche, **dadurch gekennzeichnet, dass** das Staubabführrohr (52) an der Schutzhaube (40) befestigt ist.

7. Schutzvorrichtung nach einem der vorhergehenden Ansprüche, **dadurch gekennzeichnet, dass** die Schutzhaube (40) dazu vorgesehen ist, in einem auf einem ebenen Werkstück (30) in Betriebsstellung aufliegenden Zustand das Werkzeug in Verbindung mit dem Werkstück (30) in einem von der Eindringtiefe des Werkzeugs in das Werkstück (30) unabhängigem Umfang zu umschließen.

8. Schutzvorrichtung nach Anspruch 1, **dadurch gekennzeichnet, dass** die Gleitkufe (49) den Querschnitt des Austrittsbereichs im Bereich des Staubabführrohrs (52) verengt.

9. Schutzvorrichtung nach einem der vorhergehenden Ansprüche, **dadurch gekennzeichnet, dass** die Schutzhaube (40) in einem auf einem ebenen Werkstück (30) in Betriebsstellung aufliegenden Zustand eine Lufteinlassöffnung (68) aufweist, deren Größe unabhängig von der Einbringtiefe des Werkzeugs in das Werkstück (30) ist.

10. Schutzvorrichtung nach Anspruch 9, **dadurch gekennzeichnet, dass** die Lufteinlassöffnung (68) relativ zum Werkzeug gegenüber dem Staubabführrohr (52) angeordnet ist.

11. Schutzvorrichtung nach einem der vorhergehenden Ansprüche, **gekennzeichnet durch** ein an der Schutzhaube (40) befestigtes Drosselblech (76).

12. Handwerkzeugmaschine, insbesondere Winkelschleifer, mit einer Schutzvorrichtung (33) nach einem der vorhergehenden Ansprüche.

## Claims

1. Protective device (33) for a portable power tool, in particular for a portable grinder, having a protective hood (40) which is intended for at least partly enclosing a disc-shaped, rotating tool, and having a dust discharge tube (52), the longitudinal axis of which is arranged at an angle of up to 80° to the rotation axis of the tool, part of the dust discharge tube (52) passing through the plane of a flat side of the tool, the protective hood (40) having an exit region in which the tool partly comes out of the protective hood (40) during operation, and the protective hood (40) comprising a sliding skid (49) in the exit region, **characterized in that** the dust discharge tube (52) is firmly connected to the sliding skid (49).

2. Protective device according to Claim 1, **characterized in that** the tool passes through an aperture (74, 174) of the dust discharge tube (52) in its radially outermost region.

3. Protective device according to Claim 1 or 2, **characterized in that** the part of the dust discharge tube (52) which passes through the plane of the flat side of the tool is arranged in such a way that grinding dust directed away from a workpiece (30) by the tool is set in a rotational movement in the dust discharge tube (52).

4. Protective device according to one of the preceding claims, **characterized in that** the dust discharge tube (52) narrows towards its orifice pointing towards the tool.

5. Protective device according to one of the preceding claims, **characterized by** a fastening device for fastening the protective hood (40) to the portable power tool, the dust discharge tube (52) being mounted relative to the fastening device.

6. Protective device according to one of the preceding claims, **characterized in that** the dust discharge tube (52) is fastened to the protective hood (40).

7. Protective device according to one of the preceding claims, **characterized in that** the protective hood (40), in a state resting on a flat workpiece (30) in the operating position, is intended for enclosing the tool in conjunction with the workpiece (30) to an extent independent of the penetration depth of the tool into the workpiece (30).

8. Protective device according to Claim 1, **characterized in that** the sliding skid (49) narrows the cross section of the exit region in the region of the dust discharge tube (52).

9. Protective device according to one of the preceding claims, **characterized in that** the protective hood (40), in a state resting on a flat workpiece (30) in the operating position, has an air inlet opening (68), the size of which is independent of the penetration depth of the tool into the workpiece (30).

10. Protective device according to Claim 9, **characterized in that** the air inlet opening (68) is arranged relative to the tool opposite the dust discharge tube (52).

11. Protective device according to one of the preceding claims, **characterized by** a choke plate (76) fastened to the protective hood (40).

12. Portable power tool, in particular an angle grinder, having a protective device (33) according to one of the preceding claims.

## Revendications

1. Dispositif de protection (33) pour une machine-outil portative, en particulier de type meuleuse, comprenant un capot de protection (40) prévu pour entourer au moins partiellement un outil rotatif en forme de disque, et comprenant un tube d'évacuation de la poussière (52) dont l'axe longitudinal fait un angle de jusqu'à 80° avec l'axe de rotation de l'outil, une partie du tube d'évacuation de la poussière (52) traversant le plan d'un côté plat de l'outil, le capot de protection (40) présentant une zone de sortie dans laquelle l'outil sort partiellement du capot de protection (40) pendant le fonctionnement, et le capot de protection (40) comprenant dans la zone de sortie un patin de glissement (49),
**caractérisé en ce que**
le tube d'évacuation de la poussière (52) est relié fixement au patin de glissement (49).

2. Dispositif de protection selon la revendication 1,
**caractérisé en ce que**
l'outil a sa zone située radialement le plus à l'extérieur, qui traverse un évidement (74, 174) du tube d'évacuation de la poussière (52).

3. Dispositif de protection selon la revendication 1 ou 2,
**caractérisé en ce que**
la partie du tube d'évacuation de la poussière (52) qui traverse le plan du côté plat de l'outil est disposée de telle sorte que la poussière de meulage provenant d'une pièce à usiner (30) et évacuée par l'outil est entraînée dans un mouvement de rotation dans le tube d'évacuation de la poussière (52).

4. Dispositif de protection selon l'une des revendications précédentes,
**caractérisé en ce que**
le tube d'évacuation de la poussière (52) se rétrécit vers son embouchure tournée vers l'outil.

5. Dispositif de protection selon l'une des revendications précédentes,
**caractérisé par**
un dispositif de fixation du capot de protection (40) à la machine-outil portative, le tube d'évacuation de la poussière (52) étant logé par rapport au dispositif de fixation.

6. Dispositif de protection selon l'une des revendications précédentes,
**caractérisé en ce que**
le tube d'évacuation de la poussière (52) est fixé au capot de protection (40).

7. Dispositif de protection selon l'une des revendications précédentes,
**caractérisé en ce que**
dans un état reposant sur une pièce à usiner plate (30) en position de fonctionnement, le capot de protection (40) est prévu en liaison avec la pièce à usiner (30) pour entourer l'outil dans une périphérie indépendante de la profondeur d'enfoncement de l'outil dans la pièce à usiner (30).

8. Dispositif de protection selon la revendication 1,
**caractérisé en ce que**
le patin de glissement (49) réduit la section transversale de la zone de sortie dans la zone du tube d'évacuation de la poussière (52).

9. Dispositif de protection selon l'une des revendications précédentes,
**caractérisé en ce que**
le capot de protection (40), dans un état reposant sur une pièce à usiner plate (30) dans la position de fonctionnement, présente une ouverture d'admission d'air (68) dont la taille est indépendante de la profondeur d'enfoncement de l'outil dans la pièce à usiner (30).

10. Dispositif de protection selon la revendication 9,
**caractérisé en ce que**
l'ouverture d'admission d'air (68) est disposée en face du tube d'évacuation de la poussière (52) par rapport à l'outil.

11. Dispositif de protection selon l'une des revendications précédentes,
**caractérisé par**
une tôle d'étranglement (76) fixée au capot de protection (40).

12. Machine-outil portative, en particulier meuleuse d'angle, comprenant un dispositif de protection (33) selon l'une des revendications précédentes.
